Europäisches Patentamt

European Patent Office

Office européen des brevets

(19)

(11) **EP 0 862 161 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.$^7$: **G10L 15/06**

(21) Anmeldenummer: **98200599.3**

(22) Anmeldetag: **25.02.1998**

(54) **Verfahren zur Spracherkennung mit Sprachmodellanpassung**

Speech recognition method with model adaptation

Procédé de reconnaissance de la parole avec adaptation de modèle

(84) Benannte Vertragsstaaten:
**DE FR GB**

(30) Priorität: **28.02.1997 DE 19708183**

(43) Veröffentlichungstag der Anmeldung:
**02.09.1998 Patentblatt 1998/36**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA Eindhoven (NL)**
Benannte Vertragsstaaten:
**FR GB**

(72) Erfinder:
• **Kneser, Reinhard
Röntgenstrasse 24, 22335 Hamburg (DE)**
• **Peters, Jochen, Dr.
Röntgenstrasse 24, 22335 Hamburg (DE)**
• **Klekow, Dietrich, Dr.
Röntgenstrasse 24, 22335 Hamburg (DE)**

(74) Vertreter: **Volmer, Georg, Dipl.-Ing. et al
Philips Intellectual Property & Standards GmbH,
Postfach 50 04 42
52088 Aachen (DE)**

(56) Entgegenhaltungen:
• **KNESER R ET AL: "Semantic clustering for adaptive language modeling" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, Seiten 779-782 vol.2, XP002089828 ISBN 0-8186-7919-0, 1997, Los Alamitos, CA, USA, IEEE Comput. Soc. Press, USA**
• **KNESER R ET AL: "ON THE DYNAMIC ADAPTATION OF STOCHASTIC LANGUAGE MODELS" SPEECH PROCESSING, MINNEAPOLIS, APR. 27 - 30, 1993, Bd. 2, 27. April 1993, Seiten II-586-589, XP000427857 INSTITUTE OF ELECTRICAL AND ELECTRONICS ENGINEERS**
• **SRINVASA RAO P ET AL: "LANGUAGE MODEL ADAPTATION VIA MINIMUM DISCRIMINATION INFORMATION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 161-164, XP000657955 INSTITUTE OF ELECTRICAL AND ELECTRONICS ENGINEERS**
• **SHO-ICHI MATSUNAGA ET AL: "TASK ADAPTATION IN SYLLABLE TRIGRAM MODELS FOR CONTINUOUS SPEECH RECOGNITION" IEICE TRANSACTIONS ON INFORMATION AND SYSTEMS, Bd. E76 - D, Nr. 1, 1. Januar 1993, Seiten 38-43, XP000354884**

- **IYER R ET AL: "Modeling long distance dependence in language: topic mixtures vs. dynamic cache models" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, Seiten 236-239 vol.1, XP002089829 ISBN 0-7803-3555-4, 1996, New York, NY, USA, IEEE, USA**

## Beschreibung

Die Erfindung betrifft die automatische Erkennung von Sprache, bei der ein Sprachmodell mit Sprachmodellwerten verwendet wird, die aus einem längeren Trainingstext ermittelt werden, wobei für bestimmte Fälle, insbesondere bestimmte Textarten, eine Anpassung des Sprachmodells anhand insbesondere kurzer Textteile vorgenommen wird.

Bei der automatischen Spracherkennung wird aus einem Sprachsignal eine Folge von Testwerten abgeleitet, die mit gespeicherten Referenzwerten verglichen werden, wobei Folgen von Referenzwerten Wörter eines vorgegebenen Vokabulars darstellen. Aus dem Vergleich werden Bewertungswerte abgeleitet, die an Wortgrenzen mit Sprachmodellwerten verknüpft werden. Diese Sprachmodellwerte geben die Wahrscheinlichkeiten gegebener Wortfolgen begrenzter Länge wieder und sind aus einer größeren Menge von Trainingstexten ermittelt worden, die auch durch geschriebene Texte gebildet sein können. Dadurch können mit diesen Sprachmodellwerten langfristige Änderungen im Sprachgebrauch, wie z.B. Thema oder Sprachstil, nicht berücksichtigt werden. Da gut angepaßte Sprachmodellwerte die Zuverlässigkeit der Spracherkennung erheblich beeinflussen, ist es erwünscht, anhand einer kleinen aktuellen Textmenge die Sprachmodellwerte möglichst gut an diesen Text anzupassen. Diese Anpassung kann während der Erkennung eines speziellen Textes erfolgen oder auch im Anschluß an die Erkennung eines Teils eines Textes, nachdem Erkennungsfehler manuell berichtigt wurden. Diese Anpassung kann aber auch erfolgen, indem der spezielle Text einmal dem Erkennungsprozeß unterworfen wird und daraus angepaßte Sprachmodellwerte erzeugt werden, die für eine erneute Erkennung desselben Textes verwendet werden.

Eine aus IEEE Trans. on Pattern Analysis and Machine Intelligence, Vol. 12, June 1990, Seiten 570 bis 583 bekannte Methode, ein adaptives Sprachmodell zu erstellen, ist der sogennante Sprachmodell-Cache. Hierbei werden relative Häufigkeiten $N_a(w)/N_a$ berechnet, wobei $N_a(w)$ die Häufigkeit des Wortes w im Adaptionsmaterial bezeichnet und $N_a$ für die Gesamtzahl der Wörter im Adaptionsmaterial steht. Das adaptive Cache-Sprachmodell berechnet sich nun als

$$P_a(w|h) := \lambda\, P_s(w|h) + (1-\lambda)\frac{N_a(w)}{N_a}$$

wobei der Interpolationsparameter $\lambda$ entweder fest vorgegeben oder bei jeder Adaption so bestimmt wird, daß das Adaptionsmaterial bestmöglich beschrieben wird, wie aus Proc. ICASSP, Minneapolis, U.S.A.,Vol.II,April 1993,Seiten 585 bis 593 bekannt ist. Die dadurch erreichte Anpassung der Sprachmodellwerte an einen aktuellen Text ist jedoch nicht optimal.

Aufgabe der Erfindung ist es, ein Verfahren zur Anpassung von Sprachmodellwerten anzugeben, das auch anhand eines kurzen Sprachsignals eine gute Anpassung der Sprachmodellwerte an Besonderheiten dieses Sprachsignals, wie Thema oder Sprachstil, ermöglicht.

Diese Aufgabe wird erfindungsgemäß dadurch gelöst, daß Unigramm-Sprachmodellwerte, die anhand einer großen Textmenge gewonnen wurden, anhand eines aktuellen Sprachsignals angepaßt werden und mit Hilfe der angepaßten Unigramm-Sprachmodellwerte angepaßte M-Gramm-Sprachmodellwerte ermittelt werden. Es werden also nicht direkt die M-Gramm-Sprachmodellwerte verändert, sondern zunächst werden die Unigramm-Sprachmodellwerte angepaßt und gemäß dieser Anpassung danach die M-Gramm-Werte verändert. Dadurch ist es möglich, die M-Gramm-Werte schon anhand einer kleinen Menge von gesprochenen Textdaten anzupassen, in denen ein großer Teil der den M-Gramm-Werten zugrundeliegenden Wortfolgen noch nicht aufgetreten sind. Von den einzelnen Wörtern des Vokabulars treten wesentlich mehr in einem kurzen Text auf, so daß das Unigramm-Sprachmodell bei einem kurzen gesprochenen Text umfangreicher angepaßt werden'kann. Eine wesentliche Erkenntnis ist, daß bereits mit diesen angepaßten Unigramm-Werten eine gute Anpassung der M-Gramm-Werte erfolgen kann, wobei beispielsweise die Häufigkeit der Folge von verschiedenen Vorgängerwörtern im kurzen gesprochenen Text nicht berücksichtigt wird. Die Sprachmodellwerte stellen ohnehin keine exakten Werte dar, sondern lediglich Schätzungen von Wahrscheinlichkeiten von Wörtern bzw. Wortfolgen, und die angepaßten Sprachmodellwerte stellen dann lediglich verbesserte Schätzwerte dar.

Für die Anpassung der Unigramm-Sprachmodellwerte bestehen verschiedene Möglichkeiten, wobei eine besonders günstige Möglichkeit von einer Klasseneinteilung ausgeht, bei der jedes Wort des Vokabulars eindeutig einer bestimmten semantischen Klasse zugeordnet ist. Diese Klassenzuordnung kann automatisch ermittelt werden, wenn unterschiedliche Trainings-Sprachsignale vorliegen, die aus beispielsweise unterschiedlichen Themenbereichen stammen und unterschiedliche Sprachstile enthalten. Dies soll nachfolgend näher erläutert werden.

Die adaptiven Unigramm-Sprachmodellwerte $P_a$ können als Linearkombination verschiedener Unigrammm-Komponenten $P_i(w)$ realisiert werden:

$$P_a(w) = \sum_i \lambda_i P_i(w) \qquad mit \qquad \sum_i \lambda_i = 1$$

Die Adaptivität ergibt sich entweder daraus, daß die Interpolationsparameter $\lambda_i$ adaptiv bestimmt werden oder daß eine oder mehrere Komponenten selber adaptiv sind.

Als Komponenten kommen in Frage:

- Ein statisches Unigramm $P_s(w)$, welches anhand des gesamten Trainingstextes geschätzt wurde.
- Ein statisches Unigramm $P_D(w)$, welches anhand von ausgewählten, zu einem bestimmten Thema D gehörigen Texten geschätzt wurde.
- Eine Cache-Komponente

$$P_c(w) := \frac{N_a(w)}{N_a}$$

- Eine semantische Klassen-Cache-Komponente,

$$P_K(w) := P_s(w|K(w)) \frac{N_a(K(w))}{N_a}$$

wobei $N_a(K(w))$ die Häufigkeit der Klasse K, zu der das Wort w gehört, und $P_s(w \mid K(w))$ die bedingte Wahrscheinlichkeit für ein Wort, gegeben seine Klasse, ist und auf dem gesamten Trainingsmaterial geschätzt wird. Dabei wird davon ausgegangen, daß jedes Wort w zu genau einer semantischen Klasse K(w) gehört.

Zum automatischen Erzeugen semantischer Klassen wird davon ausgegangen, daß ein Textkorpus zum Trainieren vorliegt, welches in einzelne, thematisch zusammenhängende Teilstücke, sogenannte Artikel untergliedert ist. Mit $N_i$ wird dann die Zahl der Wörter im i-ten Artikel und mit $N_i(w)$ bzw. $N(w)$ die Häufigkeit des Wortes w im i-ten Artikel bzw. im gesamten Korpus bezeichnet. Für eine gegebene Klasseneinteilung K, welche jedem Wort w genau eine semantische Klasse K(w) zuordnet, sind die Artikelhäufigkeiten

$$N_i(a;K) := \sum_{w:\, K(w)=a} N_i(w)$$

Analog wird die Klassenhäufigkeit N(a;K) für das gesamte Korpus gebildet. Wenn aus dem Kontext klar ist, um welche Klassenzuteilung es sich handelt, wird diese in einer verkürzten Schreibweise weggelassen.

Mit dieser Nomenklatur kann für eine beliebige Klasseneinteilung folgende logarithmische Likelihood berechnet werden:

$$f_1(K) = \sum_i \sum_w N_i(w) \log \frac{N_i(K(w))}{N_i} \frac{N(w)}{N(K(w))}$$

Das Verfahren beruht nun darin, eine Klasseneinteilung zu finden, welche diese Likelihood maximiert. Da bei dieser Maximierung die von der Klasseneinteilung unabhängigen Terme nicht eingehen, kann ebensogut folgende Funktion maximiert werden:

$$f_2(K) = \sum_i \sum_w N_i(w) \log \frac{N_i(K(w))}{N(K(w))}$$

Ausgehend von einer initialen Klasseneinteilung des Vokabular in semantische Klassen wird die Klassenzugehörigkeit der einzelnen Wörter iterativ so verändert, daß bei jedem Iterationsschritt die Funktion $f_2(K)$ vergrößert wird. Der Reihe nach werden für jedes Wort w im Vokabular folgende Schritte durchgeführt:

1. Für das Wort w wird diejenige Klasse bestimmt, welche bei gleichbleibender Klasseneinteilung der anderen Wörter das Kriterium $f_2(K)$ maximiert.
2. Falls die in 1. gefundene Klasse von der ursprünglichen abweicht, wird das Wort dieser neuen Klasse zugeordnet und die Klasseneinteilung dementsprechend abgeändert.

Nachdem alle Wörter im Vokabular betrachtet wurden, wird ein neuer Durchgang durch das Vokabular gestartet. Das Verfahren wird beendet, wenn eine vorgegebene Anzahl von Durchgängen erreicht ist oder wenn in einem Durchgang keine Wörter neuen Klassen zugeordnet wurden. Damit ist eine feste Klasseneinteilung für alle Wörter des Vokabulars ermittelt, die für die angegebeneAnpassung der Unigramm-Sprachmodellwerte verwendet wird.

Für die Anpassung der M-Gramm-Sprachmodellwerte wird ein statisches M-Gramm-Modell vorausgesetzt, welches für Historienwortfolgen h, bestehend aus den dem Wort w unmittelbar vorausgegangenen Wörtern bis zu einer maximalen Länge von M-1 Wörtern, eine bedingte Wahrscheinlichkeit $P_s(w \mid h)$ schätzt. Dieses Sprachmodell umfaßt insbesondere auch ein statisches Unigramm-Modell $P_s(w)$. Es gibt nun verschiedene Methoden, wie aus dem angepaßten Unigramm-Modell $P_a(w)$ ein adaptives M-Gramm-Modell $P_a(w|h)$ berechnet werden kann. Hierzu wird zunächst folgende Größe definiert

$$\alpha(w) := \frac{P_a(w)}{P_s(w)}$$

Alternative 1:

$$P_a(w|h) = \alpha(w) P_s(w|h)$$

Alternative 2:

$$P_a(w|h) = \frac{\alpha(w)}{z(h)} P_s(w|h)$$

Hierbei sei

$$z(h) := \sum_V \alpha(v) P_s(v|h)$$

Alternative 3:

Es wird zusätzlich vorausgesetzt, daß eine Menge T von Wortfolgen der maximalen Länge M in einem Trainingstext tatsächlich beobachtetet worden ist. Ferner wird für eine Wortfolge $h = (w_1... w_i)$ die um ein Wort verkürzte Wortfolge mit $h = (w_2... w_i)$ bezeichnet. Damit ergeben sich die adaptiven Wahrscheinlichkeiten, d.h. die angepaßten Sprachmodellwerte, rekursiv als

$$P_a(w|h) = \begin{cases} \frac{\alpha(w)}{z_1(h)} P_s(w|h) & if \quad (h,w) \in T \\ \frac{1}{z_2(h)} P_a(w|\hat{h}) & else \end{cases}$$

Die Ausdrücke $z_1(h)$ und $z_2(h)$ bedeuten hierbei

$$z_1(h) = \frac{\sum\limits_{w:\,(h,\,w)\,\in T} \alpha(w)\,P_s(w|h)}{\sum\limits_{w:\,(h,\,w)\,\in T} P_s(w|h)}$$

$$z_2(h) = \frac{1 - \sum\limits_{w:\,(h,\,w)\,\in T} P_a(w|\hat{h})}{1 - \sum\limits_{w:\,(h,\,w)\,\in T} P_s(w|h)}$$

Auf diese Weise kann ein günstiges angepaßtes M-Gramm-Sprachmodell erhalten werden.

Für die Durchführung des beschriebenen Verfahrens kann ein üblicher Rechner verwendet werden, der mit einem entsprechenden Programm geladen ist. Dieses Programm kann auf einem Datenträger vorhanden sein, der in den Rechner eingeführt wird, um das Programm zu laden.

**Patentansprüche**

1. Verfahren zum Anpassen eines Sprachmodells mit Sprachmodellwerten für eine automatische Spracherkennung, bei der aus einem Sprachsignal Testwerte abgeleitet und mit ein vorgegebenes Vokabular bestimmenden Referenzwerten verglichen und Bewertungswerte abgeleitet werden, die an Wortgrenzen mit Sprachmodellwerten verknüpft werden, wobei die Sprachmodellwerte von der Wahrscheinlichkeit abhängen, daß ein bestimmtes Wort des Vokabulars in Abhängigkeit von wenigstens einem vorhergehenden Wort auftritt, mit folgenden Schritten:

   - anhand von Trainingsdaten wird ein Basis-Sprachmodell mit Unigramm- und M-Gramm-Basissprachmodellwerten mit M=2,3... bestimmt,
   - anhand von zu den Trainingsdaten unterschiedlichen Textdaten werden angepaßte Unigramm-Sprachmodellwerte aus den Unigramm-Basissprachmodellwerten bestimmt,
   - mit Hilfe der angepaßten Unigramm-Sprachmodellwerte werden angepaßte M-Gramm-Sprachmodellwerte ermittelt.

2. Verfahren nach Anspruch 1, wobei das Basis-Sprachmodell anhand von unterschiedlichen Trainingsdaten ermittelt wird und jedes Wort des Vokabulars einer von mehreren Klassen derart zugeordnet wird, daß ein mit Hilfe der Anzahl der Beobachtungen dieses Wortes in den unterschiedlichen Trainings-Sprachsignalen gebildetes Ähnlichkeitsmaß ein Maximum erreicht, und aus einem weiteren Sprachsignal der Unigramm-Basissprachmodellwert jedes Wortes innerhalb der Klasse unter Berücksichtigung der Häufigkeit aller Wörter dieser Klasse und der Häufigkeit aller Wörter aller Klassen im weiteren Sprachsignal angepaßt wird und mit diesem angepaßten Unigramm-Sprachmodellwerten die M-Gramm-Sprachmodellwerte zur Erkennung dieses weiteren Sprachsignals angepaßt werden.

3. Verfahren nach Anspruch 2, wobei die Zuordnung zu Klassen dadurch erfolgt, daß eine Anzahl Klassen vorgegeben wird und nacheinander jedes Wort jeder Klasse zugeordnet und für jede Zuordnungen des Wortes zu jeder Klasse K folgende Gleichung berechnet wird

$$f_2(K) = \sum_i \sum_w N_i(w) \log \frac{N_i(K(w))}{N(K(w))}$$

wobei $N_i(w)$ die Anzahl Beobachtungen des Wortes W in jedem der unterschiedlichen Trainings-Sprachsignale i, $N_i(K(w))$ die Anzahl der Beobachtungen aller der Klasse K bereits zugeordneten Wörter in jedem der unterschiedlichen Trainings-Sprachsignale i und $N(K(w))$ die Anzahl der Beobachtungen aller der Klasse K bereits zugeordneten Wörter in allen Trainings-Sprachsignalen darstellt, und daß die Zuordnung jedes Wortes zu einer Klasse erfolgt, für die der Wert $f_2(K)$ maximal ist.

**4.** Verfahren nach Anspruch 3, wobei nach Zuordnung aller Wörter zu Klassen der Vorgang so oft wiederholt wird, bis ein vorgegebenes Kriterium erreicht ist.

**5.** Verfahren nach einem der Ansprüche 2 bis 4, wobei ein adaptiver Unigramm-Sprachmodellwert jedes Wortes aus einer Kombination verschiedener Komponenten gebildet wird, unter denen wenigstens die folgende Komponente ist

$$P_K(\ w) : = P_s(\ w|K(\ w)\ )\frac{N_a(K(w)\ )}{N_a}$$

worin $P_s(W/K(w))$ die bedingte Wahrscheinlichkeit für ein Wort, gegeben seine Klasse gemäß den gesamten Trainings-Sprachsignalen, $N_a(K(w))$ die Anzahl der Beobachtungen aller Wörter der Klasse K im weiteren Sprachsignal und $N_a$ die Anzahl der Beobachtungen aller Wörter aller Klassen ist.

**6.** Anordnung zum Anpassen eines Sprachmodells mit Sprachmodellwerten für eine automatische Spracherkennung, bei der aus einem Sprachsignal Testwerte abgeleitet und mit ein vorgegebenes Vokabular bestimmenden Referenzwerten verglichen und Bewertungswerte abgeleitet werden, die an Wortgrenzen mit Sprachmodellwerten verknüpft werden, wobei die Sprachmodellwerte von der Wahrscheinlichkeit abhängen, daß ein bestimmtes Wort des Vokabulars in Abhängigkeit von wenigstens einem vorhergehenden Wort auftritt, enthaltend einen programmierbaren Rechner für allgemeine Zwecke, der mit einem Programm zur Durchführung jedes einzelnen Schrittes des Verfahrens nach einem der Ansprüche 1 bis 5 versehen ist.

**7.** Datenträger mit einem Computer-Programm zur Durchführung jedes einzelnen Schrittes des Verfahrens nach einem der Ansprüche 1 bis 5.

**Claims**

**1.** A method of adapting a language model with language model values for an automatic speech recognition in which test values are derived from a speech signal and are compared with reference values which define a given vocabulary, and in which scores are derived which are combined with language model values at word boundaries, which language model values depend on the probability that a given word of the vocabulary will occur in dependence on at least one preceding word, said method comprising the following steps:

- a basic language model with unigram and M-gram basic language model values is determined on the basis of training data, with M = 2, 3, ...,
- adapted unigram language model values are obtained from the unigram basic language model values on the basis of text data which differ from the training data,
- adapted M-gram language model values are determined by means of the adapted unigram language model values.

**2.** A method as claimed in claim 1, wherein the basic language model is determined on the basis of different training data, and each word of the vocabulary is assigned to one of several classes such that a degree of similarity formed by means of the number of observations of this word in the various training speech signals reaches a maximum, and wherein the unigram basic language model value of each word within the class is adapted on the basis of a further speech signal, taking into account the frequency of occurrence of all words of this class and the frequency of occurrence of all words of all classes in the further speech signal, and the M-gram language model values are adapted by means of said adapted unigram language model values for the recognition of said further speech signal.

**3.** A method as claimed in claim 2, wherein the classification takes place in that a number of classes is preprogrammed, each word is consecutively assigned to each class, and the following equation is calculated for each assignment of the word to each class K:

$$f_2(K) = \sum_i \sum_w N_i(w) \log \frac{N_i(K(w))}{N(K(w))}$$

in which $N_i(w)$ represents the number of observations of the word w in each of the various training speech signals i, $N_i(K(w))$ represents the number of observations of all words already assigned to the class K in each of the various training speech signals i, and $N(K(w))$ represents the number of observations of all words already assigned to the class K in all training speech signals, and in that each word is assigned to a class for which the value $f_2(K)$ is a maximum.

4. A method as claimed in claim 3, wherein the procedure is repeated after all words have been assigned to classes until a given criterion has been met.

5. A method as claimed in any one of the claims 2 to 4, wherein an adaptive unigram language model value of each word is formed from a combination of several components, among which at least the following component:

$$P_K(w) := P_s(w|K(w)) \frac{N_a(K(w))}{N_a}$$

in which $P_s(W/K(w))$ is the conditional probability for a word, given its class, in accordance with the total training speech signals, $N_a(K(w))$ is the number of the observations of all words in the class K in the further speech signal, and $N_a$ is the number of observations of all words of all classes.

6. An arrangement for adapting a language model with language model values for an automatic speech recognition in which test values are derived from a speech signal and are compared with reference values which define a given vocabulary, and in which scores are derived which are combined with language model values at word boundaries, which language model values depend on the probability that a given word of the vocabulary will occur in dependence on at least one preceding word, comprising a programmable general-purpose computer which is provided with a program for carrying out each individual step of the method as claimed in any one of the claims 1 to 5.

7. A data carrier with a computer program for carrying out each individual step of the method as claimed in any one of the claims 1 to 5.

**Revendications**

1. Procédé d'adaptation d'un modèle de parole avec des valeurs de modèle de parole pour une reconnaissance automatique de la parole, dans lequel des valeurs de test sont dérivées d'un signal de parole et comparées à des valeurs de référence déterminant un vocabulaire préalablement déterminé et des valeurs d'évaluation qui sont associées à des limites de mots avec des valeurs de modèle de parole sont dérivées, les valeurs de modèle de parole dépendant de la probabilité qu'un mot déterminé du vocabulaire apparaisse en fonction d'au moins un mot précédent, avec les étapes suivantes :

   - un modèle de parole de base avec des valeurs de modèle de parole de base unigrammes et M-grammes avec M = 2,3, ... est déterminé à l'aide des données de training;
   - à l'aide de données de texte différentes des données de training, des valeurs de modèle de parole unigrammes adaptées sont déterminées à partir des valeurs de modèle de parole de base unigrammes;
   - à l'aide des valeurs de modèle de parole unigrammes adaptées, des valeurs de modèle de parole M-grammes adaptées sont déterminées.

2. Procédé selon la revendication 1, dans lequel le modèle de parole de base est déterminé à l'aide de différentes données de training et chaque mot du vocabulaire est affecté à une de plusieurs classes de telle sorte qu'une mesure de similitude formée à l'aide du nombre d'observations de ce mot dans les différents signaux de parole de training atteigne un maximum et, à partir d'un signal de parole supplémentaire, la valeur du modèle de parole de base unigramme de chaque mot est adaptée à l'intérieur de la classe, en prenant en considération la fréquence de tous les mots de cette classe et la fréquence de tous les mots de toutes les classes dans le signal de parole supplémentaire et, avec les valeurs de modèle de parole unigrammes adaptées à celui-ci, les valeurs de modèle de parole M-grammes sont adaptées pour la reconnaissance de ce signal de parole supplémentaire.

3. Procédé selon la revendication 2, dans lequel l'affectation en classes est effectuée de telle sorte que le nombre de classes soit préalablement déterminé et que chaque mot soit successivement affecté à chaque classe et l'équation suivante est calculée pour chaque affectation du mot à chaque classe K :

$$f_2(K) = \sum_i \sum_w N_i(w) \log \frac{N_i(K(w))}{N(K(w))}$$

$N_i(w)$ étant le nombre d'observations du mot W dans chacun des différents signaux de parole de training i, $N_i(K(w))$ le nombre des observations de tous les mots déjà affectés à la classe K dans chacun des différents signaux de parole de training i et $N(K(w))$ le nombre des observations de tous les mots déjà affectés à la classe K dans tous les signaux de parole de training et que l'affectation de chaque mots est effectuée à une classe pour laquelle la valeur $f_2(K)$ est maximale.

4. Procédé selon la revendication 2, la procédure étant répétée après l'affectation de tous les mots à des classes jusqu'à ce qu'un critère préalablement déterminé soit atteint.

5. Procédé selon l'une des revendications 2 à 4, dans lequel un valeur de modèle de parole unigramme adaptatif de chaque mot est formé à partir d'une combinaison de différentes composantes parmi lesquelles se trouve au moins la composante suivante :

$$P_K(w) := P_s(w|K(w)) \frac{N_a(K(w))}{N_a}$$

dans lequel $P_s(w|K(w))$ est la probabilité conditionnelle d'un mot compte tenu de sa classe conformément à l'ensemble des signaux de parole de training, $N_a(K(w))$ le nombre des observations de tous les mots de la classe K dans le reste du signal de parole et $N_a$ le nombre des observations de tous les mots de toutes les classes.

6. Dispositif d'adaptation d'un modèle de parole avec des valeurs de modèle de parole pour une reconnaissance automatique de la parole, dans lequel des valeurs de test sont dérivées d'un signal de parole et comparées avec des valeurs de référence déterminant un vocabulaire préalablement déterminé et des valeurs d'évaluation qui sont associées aux limites de mots avec des valeurs de modèle de parole sont dérivées, les valeurs de modèle de parole dépendant de la probabilité qu'un mot déterminé du vocabulaire survienne en fonction d'au moins un mot précédent, contenant un ordinateur programmable à des fins générales qui est doté d'un programme de mise en oeuvre de chaque étape individuelle du procédé selon l'une des revendications 1 à 5.

7. Support de données avec un programme informatique pour la mise en oeuvre de chaque étape individuelle du procédé selon l'une des revendications 1 à 5.